# EUROPEAN PATENT SPECIFICATION

(11) **EP 4 179 784 B1**
(45) Date of publication and mention of the grant of the patent: **19.08.2026**
(21) Application number: 21749944.1
(22) Date of filing: 10.07.2021
(51) Int. Cl.: H04W 36/18, H04W 36/08, H04W 36/36, H04W 74/0833, H04W 74/0838, H04W 36/06, H04W 88/12, H04W 36/00

(54) **SUCCESS RESPONSE FOR L1/L2 BASED INTER-CELL MOBILITY**
ERFOLGSREAKTION FÜR L1/L2-BASIERTE MOBILITÄT ZWISCHEN ZELLEN
RÉPONSE DE SUCCÈS POUR UNE MOBILITÉ INTERCELLULAIRE BASÉE SUR L1/L2

(30) Priority: 13.07.2020 US 202063051321 P; 09.07.2021 US 202117371696
(43) Date of publication of application: 17.05.2023
(73) Proprietor: QUALCOMM INCORPORATED, San Diego, California 92121-1714 (US)
(72) Inventor: ZHOU, Yan, San Diego, California 92121-1714 (US); ZHANG, Qian, San Diego, California 92121-1714 (US); LUO, Tao, San Diego, California 92121-1714 (US)
(74) Representative: Bardehle Pagenberg Partnerschaft mbB Patentanwälte Rechtsanwälte
(86) International application number: PCT/US2021/041195
(87) International publication number: WO 2022/015608

(56) References cited:
- WO-A1-2019/245329
- WO-A1-2020/118488
- US-A1- 2018 279 182
- US-A1- 2019 253 945
- ERICSSON: "Single vs dual active protocol stack for reduced handover interruption", 3GPP DRAFT; R2-1903894 - SINGLE VS DUAL ACTIVE PROTOCOL STACKS FOR REDUCED HANDOVER INTERRUPTION 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Xian, China; 20190408 - 20190412, 28 March 2019 (2019-03-28), XP051693130, [retrieved on 20190328]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 16)", vol. RAN WG2, no. V16.1.0, 14 April 2020 (2020-04-14), pages 1 - 386, XP051893975, Retrieved from the Internet <URL:ftp://ftp.3gpp.org/Specs/archive/36_series/36.300/36300-g10.zip 36300-g10.docx> [retrieved on 20200414]
- ERICSSON: "Lower-layer mobility enhancements", vol. RAN WG1, no. Athens, Greece; 20190225 - 20190301, 15 February 2019 (2019-02-15), XP051600224, Retrieved from the Internet <URL:http://www.3gpp.org/ftp/tsg%5Fran/WG1%5FRL1/TSGR1%5F96/Docs/R1%2D1902528%2Ezip> [retrieved on 20190215]

## Description

### TECHNICAL FIELD

Aspects of the present disclosure relate to wireless communications, and more particularly, to layer 1 and/or layer 2 (L1/L2) based inter-cell mobility (e.g., handover) techniques.

### BACKGROUND

Wireless communication systems are widely deployed to provide various telecommunication services such as telephony, video, data, messaging, broadcasts, etc. These wireless communication systems may employ multiple-access technologies capable of supporting communication with multiple users by sharing available system resources (for example, bandwidth, transmit power, etc.). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

These multiple access technologies have been adopted in various telecommunication standards to provide a common protocol that enables different wireless devices to communicate on a municipal, national, regional, and even global level. New radio (for example, 5G NR) is an example of an emerging telecommunication standard. NR is a set of enhancements to the LTE mobile standard promulgated by 3GPP. NR is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation.

However, as the demand for mobile broadband access continues to increase, there exists a need for further improvements in NR and LTE technology. Preferably, these improvements should be applicable to other multi-access technologies and the telecommunication standards that employ these technologies.

A control resource set (CORESET) for systems, such as an NR and LTE systems, may comprise one or more control resource (e.g., time and frequency resources) sets, configured for conveying physical downlink control channel (PDCCH), within the system bandwidth. Within each CORESET, one or more search spaces (e.g., common search space (CSS), user equipment (UE)-specific search space (USS), etc.) may be defined for a given UE.

WO 2020/118488 A1 discloses a method for performing a conditional handover procedure in a wireless communications system. 3GPP TS 36.300 (v.16.1.0, 14 April 2020) provides an overview and overall description of the E-UTRAN radio interface protocol architecture. US 2019/253945 A1 discloses a method for performing enhanced make-before-break (MBB) handover. US 2018/279182 A1 discusses Layer 2 (L2) mobility for New Radio (NR) networks.

WO 2019/245329 A1 discloses a method for performing a conditional cell change in a wireless communication system is provided, wherein a wireless device receives a conditional mobility configuration associated with multiple target cells from a serving node, the conditional mobility configuration including mobility commands for each of the multiple target cells.

R1-1902528 (Ericsson; "Lower-layer mobility enhancements", 3GPP DRAFT) discusses how the beam management functionality standardized in Release 15 can be used to improve handover robustness and to achieve 0ms handover interruption.

R2-1903894 (Ericsson; "Single vs dual active protocol stack for reduced handover interruption", 3GPP DRAFT) discusses single vs. dual active protocol stack for reduced handover interruption.

### SUMMARY

The systems, methods, and devices of the disclosure each have several innovative aspects, no single one of which is solely responsible for the desirable attributes. The invention is defined by the independent claims. Various embodiments are provided by the dependent claims.

Certain aspects of the subject matter described in this disclosure can be implemented in a method for wireless communication by a user equipment (UE). The method generally includes receiving signaling configuring multiple candidate target physical cell identifiers (PCIs) of at least one candidate target cell that supports physical (PHY) layer or medium access control (MAC) layer mobility signaling, participating in a handover procedure to a target cell associated with a selected one or more of the candidate target PCIs based on PHY layer or MAC layer mobility signaling, receiving, from the target cell, a response message indicating success of the handover procedure, and terminating activity with one or more source PCIs after receiving the response message.

Certain aspects of the present disclosure can be implemented in an apparatus for wireless communication by a UE. The apparatus generally includes a memory and at least one processor coupled to the memory, the memory and the at least one processor being configured to receive signaling configuring multiple candidate target PCIs of at least one candidate target cell that supports PHY layer or MAC layer mobility signaling, participate in a handover procedure to a target cell associated with a selected one or more of the candidate target PCIs based on PHY layer or MAC layer mobility signaling, receive, from the target cell, a response message indicating success of the handover procedure, and terminate activity with one or more source PCIs after receiving the response message.

Certain aspects of the present disclosure can be implemented in an apparatus for wireless communication by a UE. The apparatus generally includes means for receiving signaling configuring multiple candidate target PCIs of at least one candidate target cell that supports PHY layer or MAC layer mobility signaling, means for participating in a handover procedure to a target cell associated with a selected one or more of the candidate target PCIs based on PHY layer or MAC layer mobility signaling, means for receiving, from the target cell, a response message indicating success of the handover procedure, and means for terminating activity with one or more source PCIs after receiving the response message.

Certain aspects of the present disclosure can be implemented in a computer readable medium having instructions stored thereon for receiving signaling configuring multiple candidate target PCIs of at least one candidate target cell that supports PHY layer or MAC layer mobility signaling, participating in a handover procedure to a target cell associated with a selected one or more of the candidate target PCIs based on PHY layer or MAC layer mobility signaling, receiving, from the target cell, a response message indicating success of the handover procedure, and terminating activity with one or more source PCIs after receiving the response message.

Certain aspects of the subject matter described in this disclosure can be implemented in a method for wireless communication by a network entity. The method generally includes transmitting, to a UE, signaling configuring multiple candidate target PCIs of at least one candidate target cell that supports PHY layer or MAC layer mobility signaling, participating in a handover procedure of the UE to a target cell associated with a selected one or more of the candidate target PCIs based on PHY layer or MAC layer mobility signaling, and transmitting, via the target cell, a response message indicating success of the handover procedure.

Certain aspects of the present disclosure can be implemented in an apparatus for wireless communication by a network entity. The apparatus generally includes a memory and at least one processor coupled to the memory, the memory and the at least one processor being configured to transmit to a UE, signaling configuring multiple candidate target PCIs of at least one candidate target cell that supports PHY layer or MAC layer mobility signaling, participate in a handover procedure of the UE to a target cell associated with a selected one or more of the candidate target PCIs based on PHY layer or MAC layer mobility signaling; and transmit, via the target cell, a response message indicating success of the handover procedure.

Certain aspects of the present disclosure can be implemented in an apparatus for wireless communication by a network entity. The apparatus generally includes means for transmitting, to a UE, signaling configuring multiple candidate target PCIs of at least one candidate target cell that supports PHY layer or MAC layer mobility signaling, means for participating in a handover procedure of the UE to a target cell associated with a selected one or more of the candidate target PCIs based on PHY layer or MAC layer mobility signaling, and means for transmitting, via the target cell, a response message indicating success of the handover procedure.

Certain aspects of the present disclosure can be implemented in a computer readable medium having instructions stored thereon for transmitting, to a UE, signaling configuring multiple candidate target PCIs of at least one candidate target cell that supports PHY layer or MAC layer mobility signaling, participating in a handover procedure of the UE to a target cell associated with a selected one or more of the candidate target PCIs based on PHY layer or MAC layer mobility signaling, and transmitting, via the target cell, a response message indicating success of the handover procedure.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions are possible, provided that they do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

While aspects and embodiments are described in this application by illustration to some examples, those skilled in the art will understand that additional implementations and use cases may come about in many different arrangements and scenarios. Innovations described herein may be implemented across many differing platform types, devices, systems, shapes, sizes, packaging arrangements. For example, embodiments and/or uses may come about via integrated chip embodiments and other non-module-component based devices (e.g., end-user devices, vehicles, communication devices, computing devices, industrial equipment, retail/purchasing devices, medical devices, AI-enabled devices, etc.). While some examples may or may not be specifically directed to use cases or applications, a wide assortment of applicability of described innovations may occur. Implementations may range in spectrum from chip-level or modular components to non-modular, non-chip-level implementations and further to aggregate, distributed, or OEM devices or systems incorporating one or more aspects of the described innovations. In some practical settings, devices incorporating described aspects and features may also necessarily include additional components and features for implementation and practice of claimed and described embodiments. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, end-user devices, etc. of varying sizes, shapes, and constitution.

To the accomplishment of the foregoing and related ends, the one or more aspects comprise the features hereinafter fully described and particularly pointed out in the claims. The following description and the appended drawings set forth in detail some illustrative features of the one or more aspects. These features are indicative, however, of but a few of the various ways in which the principles of various aspects may be employed.

### BRIEF DESCRIPTION OF THE DRAWINGS

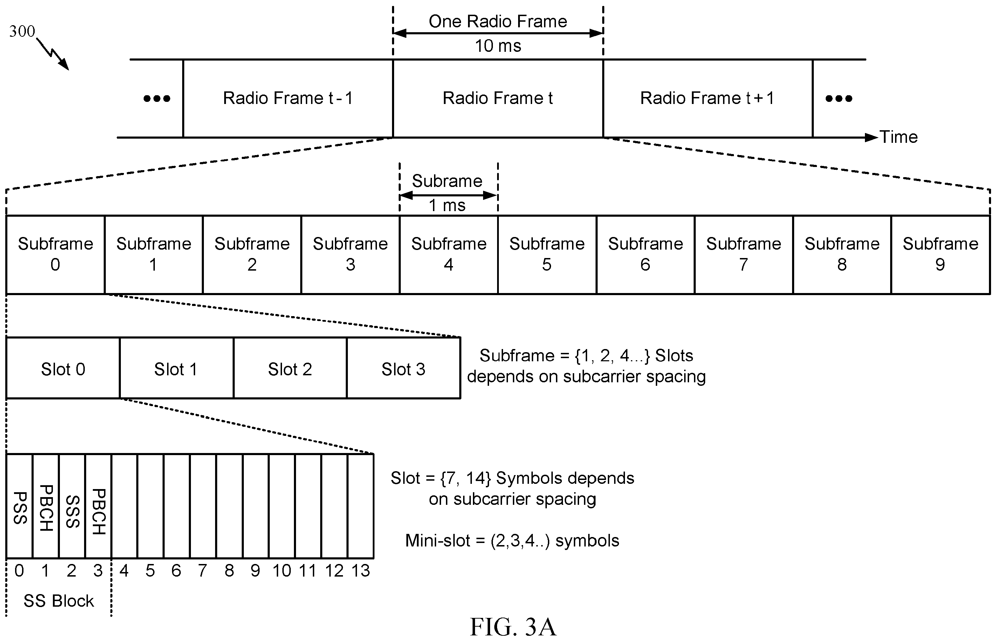

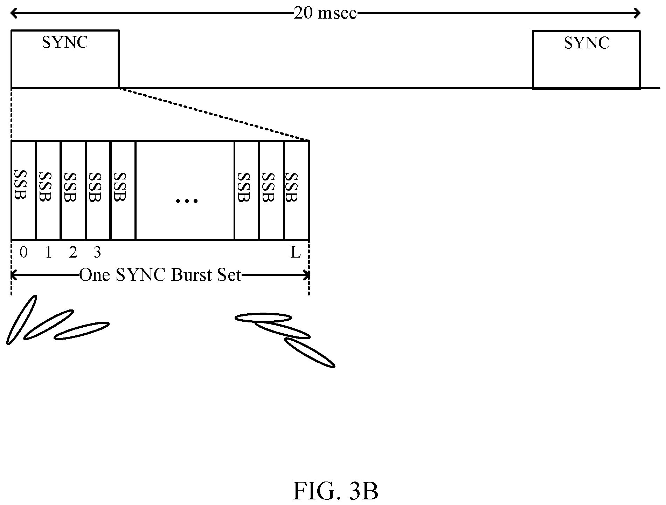

Details of one or more implementations of the subject matter described in this disclosure are set forth in the accompanying drawings and the description below. However, the accompanying drawings illustrate only some typical aspects of this disclosure and are therefore not to be considered limiting of its scope. Other features, aspects, and advantages will become apparent from the description, the drawings, and the claims. In particular, the parts of the detailed description below with reference to Figures 3A, 3B are not according to the present invention and are disclosed for illustrative purposes.
FIG. 1 shows an example wireless communication network in which some aspects of the present disclosure may be performed.
FIG. 2 shows a block diagram illustrating an example base station (BS) and an example user equipment (UE) in accordance with some aspects of the present disclosure.
FIG. 3A illustrates an example of a frame format for a telecommunication system.
FIG. 3B illustrates how different synchronization signal blocks (SSBs) may be sent using different beams.
FIG. 4 illustrates an example architecture in which aspects of the present disclosure may be practiced.
FIGs. 5 and 6 illustrate example scenarios in which aspects of the present disclosure may be practiced.
FIG. 7 illustrates operations for wireless communication by a user equipment (UE), in accordance with some aspects of the present disclosure.
FIG. 8 illustrates example operations for wireless communication by a network entity, in accordance with some aspects of the present disclosure.
FIGs. 9 and 10 illustrate communications devices that may include various components configured to perform operations for the techniques disclosed herein in accordance with aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure relate to wireless communications, and more particularly, to success responses for layer 1 and/or layer 2 (L1/L2) based inter-cell mobility (e.g., handover) techniques. As will be described in greater detail below, certain aspects of the present disclosure provide techniques for improved handover (HO) procedures based on physical layer (PHY or L1) and/or medium access control (MAC or L2) layer signalling.

For example, a user equipment (UE) participating in a HO procedure may receive a response message (e.g., a "success message") from a target cell (of the HO) indicating that the HO procedure was successful. Thus, the UE may be able to terminate activity associated with one or more source cells such that link quality with the target cell can be improved. In some cases, the UE may terminate communications with a source physical cell identifier (PCI) and/or the physical downlink control channel (PDCCH) for one of the source PCIs. The UE may also send a response indicating the receipt of the success message to a target and/or source PCI. The indication of receipt may be conveyed through a variety of manners such as a physical random access channel (PRACH) preamble, uplink reference signal, uplink control information (UCI), or a MAC control element (MAC-CE).

The following description provides examples and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband, etc. Each frequency may support a single RAT in a given geographic area in order to avoid interference between wireless networks of different RATs. In some cases, a 5G NR RAT network may be deployed.

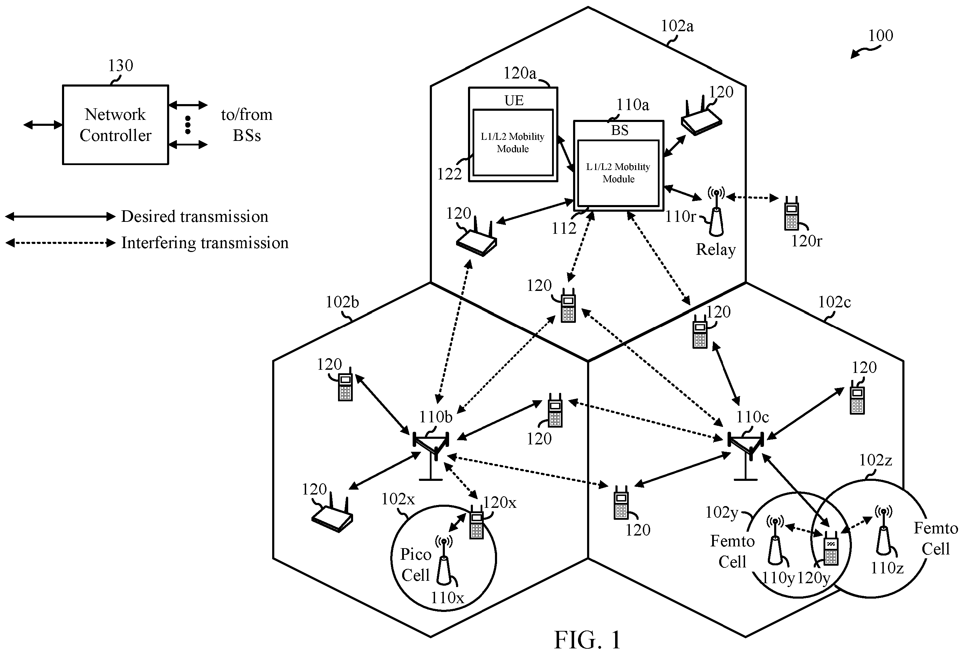

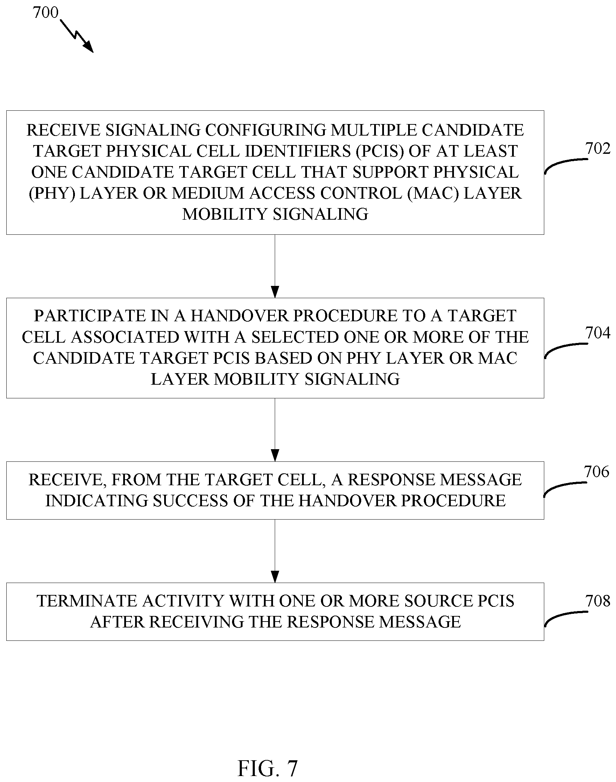

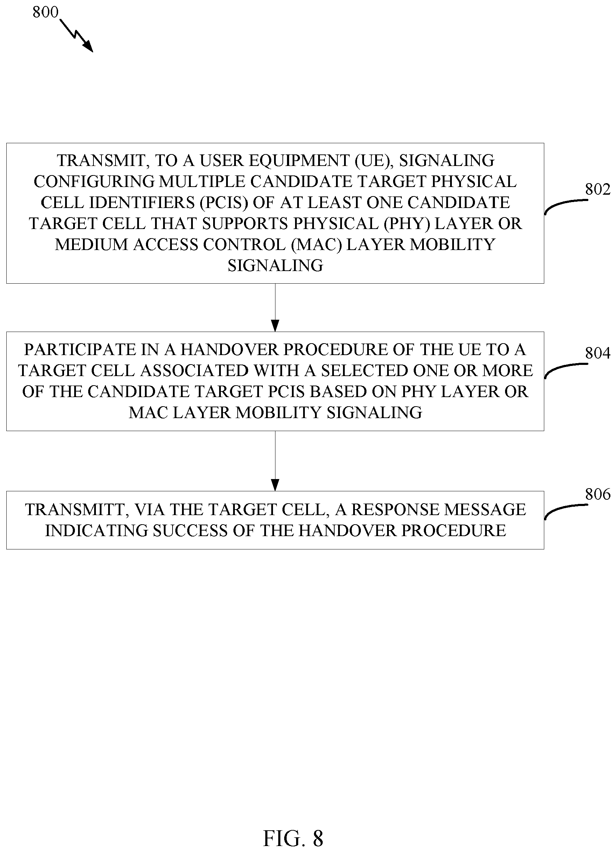

FIG. 1 illustrates an example wireless communication network 100 in which aspects of the present disclosure may be performed. For example, as shown in FIG. 1, UE 120a may include a L1/L2 mobility module 122 that may be configured to perform (or cause UE 120a to perform) operations 700 of FIG. 7. Similarly, a base station (BS) 110a may include an L1/L2 mobility module 112 that may be configured to perform (or cause BS 110a to perform) operations 800 of FIG. 8.

NR access (for example, 5G NR) may support various wireless communication services, such as enhanced mobile broadband (eMBB) targeting wide bandwidth (for example, 80 MHz or beyond), millimeter wave (mmWave) targeting high carrier frequency (for example, 25 GHz or beyond), massive machine type communications (mMTC) targeting non-backward compatible MTC techniques, or mission critical services targeting ultra-reliable low-latency communications (URLLC). These services may include latency and reliability requirements. These services may also have different transmission time intervals (TTI) to meet respective quality of service (QoS) requirements. In addition, these services may co-exist in the same time-domain resource (for example, a slot or subframe) or frequency-domain resource (for example, component carrier).

As illustrated in FIG. 1, the wireless communication network 100 may include a number of BSs 110a-z (each also individually referred to herein as BS 110 or collectively as BSs 110) and other network entities. A BS 110 may provide communication coverage for a particular geographic area, sometimes referred to as a "cell", which may be stationary or may move according to the location of a (mobile) BS 110. In some examples, the BSs 110 may be interconnected to one another or to one or more other BSs or network nodes (not shown) in wireless communication network 100 through various types of backhaul interfaces (for example, a direct physical connection, a wireless connection, a virtual network, or the like) using any suitable transport network. In the example shown in FIG. 1, the BSs 110a, 110b and 110c may be macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple cells. The BSs 110 communicate with user equipment (UEs) 120a-y (each also individually referred to herein as UE 120 or collectively as UEs 120) in the wireless communication network 100. The UEs 120 (for example, 120x, 120y, etc.) may be dispersed throughout the wireless communication network 100, and each UE 120 may be stationary or mobile.

Wireless communication network 100 may also include relay stations (for example, relay station 110r), also referred to as relays or the like, that receive a transmission of data or other information from an upstream station (for example, a BS 110a or a UE 120r) and sends a transmission of the data or other information to a downstream station (for example, a UE 120 or a BS 110), or that relays transmissions between UEs 120, to facilitate communication between devices.

A network controller 130 may couple to a set of BSs 110 and provide coordination and control for these BSs 110. The network controller 130 may communicate with the BSs 110 via a backhaul. The BSs 110 may also communicate with one another (for example, directly or indirectly) via wireless or wireline backhaul.

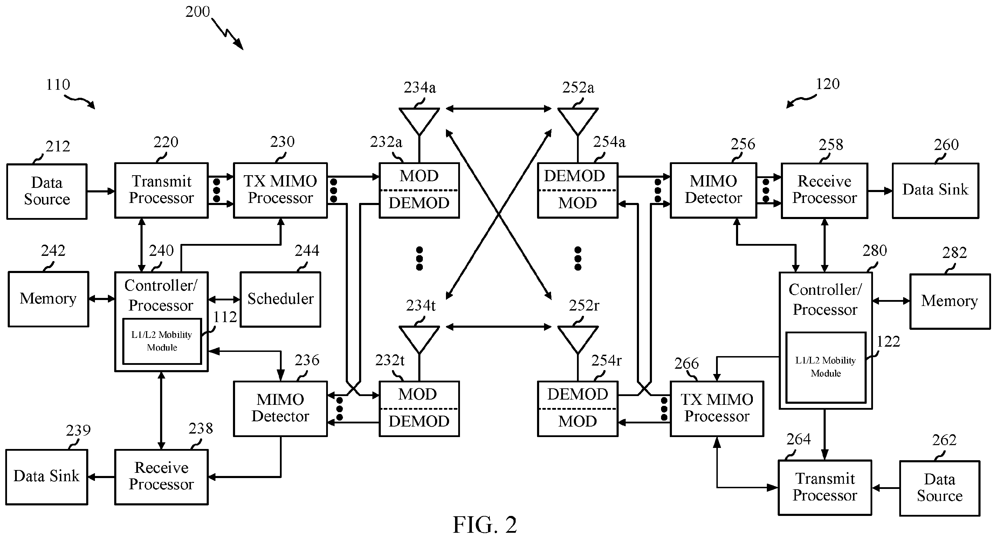

FIG. 2 shows a block diagram illustrating an example BS and an example UE in accordance with some aspects of the present disclosure.

At the BS 110, a transmit processor 220 may receive data from a data source 212 and control information from a controller/processor 240. The control information may be for the physical broadcast channel (PBCH), physical control format indicator channel (PCFICH), physical hybrid ARQ indicator channel (PHICH), physical downlink control channel (PDCCH), group common PDCCH (GC PDCCH), etc. The data may be for the physical downlink shared channel (PDSCH), etc. The processor 220 may process (for example, encode and symbol map) the data and control information to obtain data symbols and control symbols, respectively. The transmit processor 220 may also generate reference symbols, such as for the primary synchronization signal (PSS), secondary synchronization signal (SSS), and cell-specific reference signal (CRS). A transmit (TX) multiple-input multiple-output (MIMO) processor 230 may perform spatial processing (for example, precoding) on the data symbols, the control symbols, or the reference symbols, if applicable, and may provide output symbol streams to the modulators (MODs) 232a-232t. Each modulator 232 may process a respective output symbol stream (for example, for OFDM, etc.) to obtain an output sample stream. Each modulator may further process (for example, convert to analog, amplify, filter, and upconvert) the output sample stream to obtain a downlink signal. Downlink signals from modulators 232a-232t may be transmitted via the antennas 234a-234t, respectively.

At the UE 120, the antennas 252a-252r may receive the downlink signals from the BS 110 and may provide received signals to the demodulators (DEMODs) in transceivers 254a-254r, respectively. Each demodulator 254 may condition (for example, filter, amplify, downconvert, and digitize) a respective received signal to obtain input samples. Each demodulator may further process the input samples (for example, for OFDM, etc.) to obtain received symbols. A MIMO detector 256 may obtain received symbols from all the demodulators 254a-254r, perform MIMO detection on the received symbols if applicable, and provide detected symbols. A receive processor 258 may process (for example, demodulate, deinterleave, and decode) the detected symbols, provide decoded data for the UE 120 to a data sink 260, and provide decoded control information to a controller/processor 280.

On the uplink, at UE 120, a transmit processor 264 may receive and process data (for example, for the physical uplink shared channel (PUSCH)) from a data source 262 and control information (for example, for the physical uplink control channel (PUCCH) from the controller/processor 280. The transmit processor 264 may also generate reference symbols for a reference signal (for example, for the sounding reference signal (SRS)). The symbols from the transmit processor 264 may be precoded by a TX MIMO processor 266 if applicable, further processed by the demodulators in transceivers 254a-254r (for example, for SC-FDM, etc.), and transmitted to the BS 110. At the BS 110, the uplink signals from the UE 120 may be received by the antennas 234, processed by the modulators 232, detected by a MIMO detector 236 if applicable, and further processed by a receive processor 238 to obtain decoded data and control information sent by the UE 120. The receive processor 238 may provide the decoded data to a data sink 239 and the decoded control information to the controller/processor 240.

The memories 242 and 282 may store data and program codes for BS 110 and UE 120, respectively. A scheduler 244 may schedule UEs for data transmission on the downlink or uplink.

The controller/processor 280 or other processors and modules at the UE 120 may perform or direct the execution of processes for the techniques described herein. As shown in FIG. 2, the controller/processor 280 of the UE 120 has an L1/L2 mobility module 122 that may be configured to perform (or cause UE 120 to perform) operations 700 of FIG. 7. Similarly, the BS 110a may include an L1/L2 mobility module 112 that may be configured to perform (or cause BS 110a to perform) operations 800 of FIG. 8.

FIG. 3A is a diagram showing an example of a frame format 300 for NR. The transmission timeline for each of the downlink and uplink may be partitioned into units of radio frames. Each radio frame may have a predetermined duration (e.g., 10 ms) and may be partitioned into 10 subframes, each of 1 ms, with indices of 0 through 9. Each subframe may include a variable number of slots depending on the subcarrier spacing. Each slot may include a variable number of symbol periods (e.g., 7 or 14 symbols) depending on the subcarrier spacing. The symbol periods in each slot may be assigned indices. A mini-slot, which may be referred to as a sub-slot structure, refers to a transmit time interval having a duration less than a slot (e.g., 2, 3, or 4 symbols).

Each symbol in a slot may indicate a link direction (e.g., DL, UL, or flexible) for data transmission and the link direction for each subframe may be dynamically switched. The link directions may be based on the slot format. Each slot may include DL/UL data as well as DL/UL control information.

In NR, a synchronization signal (SS) block is transmitted. The SS block includes a PSS, a SSS, and a two symbol PBCH. The SS block can be transmitted in a fixed slot location, such as the symbols 0-3 as shown in FIG. 3A. The PSS and SSS may be used by UEs for cell search and acquisition. The PSS may provide half-frame timing, the SS may provide the CP length and frame timing. The PSS and SSS may provide the cell identity. The PBCH carries some basic system information, such as downlink system bandwidth, timing information within radio frame, SS burst set periodicity, system frame number, etc. The SS blocks may be organized into SS bursts to support beam sweeping. Further system information such as, remaining minimum system information (RMSI), system information blocks (SIBs), other system information (OSI) can be transmitted on a PDSCH in certain subframes. The SS block can be transmitted up to sixty-four times, for example, with up to sixty-four different beam directions for mmW. The up to sixty-four transmissions of the SS block are referred to as the SS burst set. SS blocks in an SS burst set are transmitted in the same frequency region, while SS blocks in different SS bursts sets can be transmitted at different frequency locations.

As shown in FIG. 3B, the SS blocks may be organized into SS burst sets to support beam sweeping. As shown, each SSB within a burst set may be transmitted using a different beam, which may help a UE quickly acquire both transmit (Tx) and receive (Rx) beams (particular for mmW applications). A physical cell identity (PCI) may still decoded from the PSS and SSS of the SSB.

A control resource set (CORESET) for systems, such as an NR and LTE systems, may comprise one or more control resource (e.g., time and frequency resources) sets, configured for conveying PDCCH, within the system bandwidth. Within each CORESET, one or more search spaces (e.g., common search space (CSS), UE-specific search space (USS), etc.) may be defined for a given UE. According to aspects of the present disclosure, a CORESET is a set of time and frequency domain resources, defined in units of resource element groups (REGs). Each REG may comprise a fixed number (e.g., twelve) tones in one symbol period (e.g., a symbol period of a slot), where one tone in one symbol period is referred to as a resource element (RE). A fixed number of REGs may be included in a control channel element (CCE). Sets of CCEs may be used to transmit new radio PDCCHs (NR-PDCCHs), with different numbers of CCEs in the sets used to transmit NR-PDCCHs using differing aggregation levels. Multiple sets of CCEs may be defined as search spaces for UEs, and thus a NodeB or other base station may transmit an NR-PDCCH to a UE by transmitting the NR-PDCCH in a set of CCEs that is defined as a decoding candidate within a search space for the UE, and the UE may receive the NR-PDCCH by searching in search spaces for the UE and decoding the NR-PDCCH transmitted by the NodeB.

### Example Methods for L1/L2 Mobility

Aspects of the present disclosure relate to wireless communications, and more particularly, to mobility techniques that allow for dynamically updating a set of cells and/or beams activated to serve a user equipment (UE). As will be described in greater detail below, enabling L1/L2 inter-cell mobility based on signaling to/from a UE.

The techniques presented herein may be applied in various bands utilized for NR. For example, for the higher band referred to as frequency range (FR) 4 (e.g., 52.6 GHz - 114.25 GHz), an orthogonal frequency division multiplexed (OFDM) waveform with very large subcarrier spacing (SCS) (960 kHz - 3.84 MHz) is required to combat severe phase noise. Due to the large subcarrier spacing, the slot length tends to be very short. In a lower band referred to as FR2 (24.25 GHz to 52.6 GHz) with 120 kHz SCS, the slot length is 125µs, while in FR4 with 960 kHz, the slot length is 15.6µs.

In multi-beam operation (e.g., involving FR1 and FR2 bands), more efficient uplink (UL) and/or downlink (DL) beam management may allow for increased intra-cell and inter-cell mobility (e.g., L1 and/or L2-centric mobility) and/or a larger number of transmission configuration indicator (TCI) states. For example, the states may include the use of a common beam for data and control transmission and reception for UL and DL operations, a unified TCI framework for UL and DL beam indication, and enhanced signaling mechanisms to improve latency and efficiency (e.g., dynamic usage of control signaling).

Accordingly, the techniques presented herein provide signaling mechanisms that may help support such enhanced features, improve latency, and improve efficiency with more usage of dynamic control signaling. For example, the techniques described herein make use of PHY or medium access control (MAC, Layer 2 or L2) signaling, as opposed to higher layer (e.g., radio resource control (RRC)) signaling.

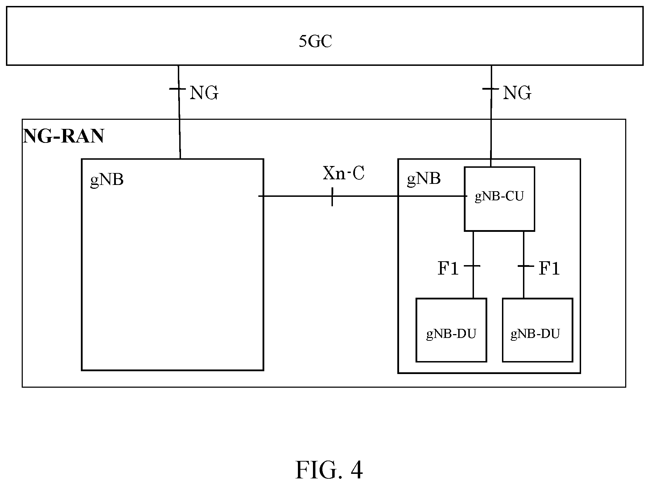

FIG. 4 illustrates an example architecture in which aspects of the present disclosure may be practiced. As illustrated, the architecture includes a gNB Central Unit (gNB-CU). The gNB-CU generally serves as a logical node hosting RRC, Service Data Adaptation Protocol (SDAP) and Packet Data Convergence Protocol (PDCP) of the gNB that controls the operation of one or more gNB distributed units (gNB-DUs). As illustrated, the gNB-CU terminates an F1 interface connected with the gNB-DU.

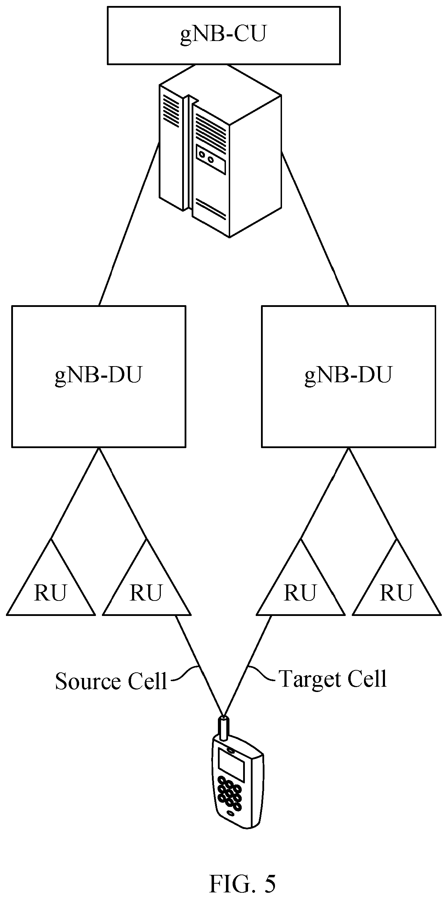

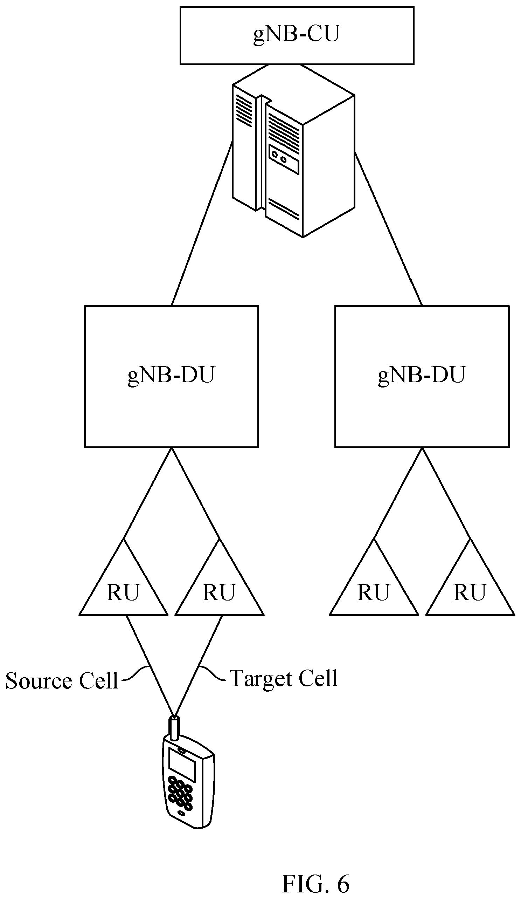

A gNB-DU generally serves as a logical node hosting RLC, MAC and PHY layers of the gNB, and its operation is controlled by the gNB-CU. As illustrated in FIGs. 5 and 6, one gNB-DU supports one or multiple cells (but each cell is supported by only one gNB-DU). The gNB-DU terminates the F1 interface connected with the gNB-CU.

FIGs. 5 and 6 illustrate example scenarios in which aspects of the present disclosure may be practiced.

As illustrated in FIG. 5, in some cases, a UE may be handed over between (source and target) cells supported by (radio units or RUs of) different DUs under the same CU. The RUs generally contain only PHY layer logic. In the scenario of FIG. 5, the cells could have non-collocated (in different DUs) PHY, MAC, and RLC logic, but common PDCP and RRC logic (the same CU). While L1/L2 signaling techniques described herein may be used for mobility, the data path from PDCP to different RLCs present some control aspects that may be addressed by coordination between DUs.

In the scenario illustrated in FIG. 6, on the other hand, source and target cells are supported by (and belong to) the same DU. Thus, L1/L2 mobility may be particularly attractive in this scenario, as the cells can share MAC and upper layers (same DU). In this scenario, when performing a handover via L1/L2 signaling, the data path at MAC and above stays the same.

As noted above, the distributed RUs contain only PHY layer and may be used (activated/de-activated) in a similar manner to carrier aggregation (CA), but cells may be on the same carrier frequencies. As such, aspects of the present disclosure, however, may utilize mechanisms similar to those used in CA to enable L1/L2 mobility (e.g., activating/de-activating cells).

As an initial step, RRC signaling may be used to configure a set of cells for L1/L2 mobility. In general, the cell set may be designed to be large enough to cover meaningful mobility (e.g., anticipated mobility of a UE within a given area and given time). As will be described below, mobility management may be performed by activating/de-activating cells in the set.

From the configured set, at any given time, a certain set of cells may be activated. This set of activated cells generally refers to one or more cells in the configured set that are activated. If the set of activated cells includes two or more activated cells, the UE may be handed over from one activated cell to another activated cell via dynamic (e.g., PHY/MAC) signaling.

Which cells are activated for any given UE may depend on UE reported measurements. Configured cells that are not activated (a set of deactivated cells) may include the (remaining) group of cells in in the configured set that are deactivated (not activated).

### Example Target PCI Selection

Aspects of the present disclosure provide apparatus, methods, processing systems, and computer readable mediums for enabling L1/L2 inter-cell mobility based on signaling to/from a user equipment (UE). In some cases, L1/L2 signaling may be used to indicate a target physical cell identifier (PCI) selected for handover.

Some features described herein may facilitate uplink (UL) beam selection for UEs equipped with multiple panels. For example, UL beam selection may be facilitated through UL beam indication based on a unified transmission configuration indictor (TCI) framework, enabling simultaneous transmission across multiple panels, and enabling fast panel selection. Further, UE-initiated or L1-event-driven beam management may also reduce latency and the probability that beam failure events occur.

Additional enhancements for multi-transmission reception point (TRP) deployment may target both FR1 and FR2 bands. These enhancements may improve reliability and robustness for channels other than the PDSCH (e.g., PDCCH, PUSCH, and PUCCH) using multi-TRP and/or multi-panel operations. These enhancements may, in some cases, be related to quasi co-location (QCL) and TCI that may enable inter-cell multi-TRP operations and may allow for simultaneous multi-TRP transmission with multi-panel reception, assuming multi-DCI-based multi-PDSCH reception.

Still, further enhancements may support single frequency networks (SFNs) in high-speed environments (e.g., in a high speed train (HST) scenario). These enhancements may include QCL assumptions for demodulation reference signals (DMRS), such as multiple QCL assumptions for the same DMRS ports and/or targeting downlink-only transmission. In some cases, the enhancements may specify a QCL or QCL-like relation, including applicable QCL types and associated requirements, between downlink and uplink signals by using a unified TCI framework.

In Rel-15 and Rel-16, each serving cell may have a RRC-configured serving cell identifier (ID) and a RRC-configured physical cell indicator (PCI). A UE may also acquire the PCI from the synchronization signal block (SSB) of the serving cell.

To enable L1 (e.g., physical layer)/L2 (e.g., medium access control (MAC) layer) based inter-cell mobility, a gNB may need to know whether a UE supports L1/L2 mobility. L1/L2 based inter-cell mobility may include various operating modes. In a first operating mode, each serving cell can have a PCI and multiple physical cell sites (e.g., remote radio headers (RRHs)). Each RRH may transmit a different set of SSB IDs using the same PCI. A DCI or MAC-CE may select which RRH or corresponding SSB to serve the UE based on signal strength metrics (e.g., reference signal received power (RSRP)) per reported SSB ID.

In another operating mode, each serving cell may be configured with multiple PCIs. Each RRH of the serving cell can use one of the multiple PCIs configured for the serving cell and can transmit the full set of SSB IDs configured for the cell. A DCI or MAC-CE can select which RRH(s) or corresponding PCI(s) and/or SSB(s) to serve the UE based on signal strength metrics (e.g., reference signal received power (RSRP)) per reported SSB ID per reported PCI.

In still another operating mode, each serving cell may be configured with a single PCI. A DCI or MAC-CE can identify serving cell(s) or corresponding serving cell ID(s) to serve the UE based on signal strength metrics (e.g., RSRP) pre reported SSB ID per reported PCI.

While the above refers to selection or use of SSBs, it should be understood that other cell-identifying reference signals may be used to identify a serving cell to serve a UE. For example, channel state information (CSI) reference signals (CSI-RS) or positioning reference signals (PRSs) can be used to identify the serving cell(s) to serve the UE.

In some embodiments, in L1/L2 inter-cell mobility, a UE may be configured with multiple candidate cells (e.g., PCIs) for L1 metric measurement and reporting. L1 metric measurement and reporting may waste power in situations where a UE is stationary or substantially stationary. A UE may continue to report L1 metrics while stationary, and it may take some time before a gNB determines, based on the reported L1 metrics, that the UE is stationary.

### Example Success Response for L1/L2 Based Inter-Cell Mobility

Aspects of the present disclosure provide apparatus, methods, processing systems, and computer readable mediums for layer 1 (L1)/layer 2 (L2) based inter-cell mobility that involves an indication provided to a user equipment (UE) from a target cell that a handover was successful (e.g., a "success response"). Accordingly, the UE may then terminate activity with one or more cell(s) associated with one or more source PCI(s).

To reduce handover (HO) latency, L1/L2 based inter-cell mobility was introduced previously (in Rel-17). In L1/L2 based HO, each serving cell may have multiple physical cell identifiers (PCIs) for remote radio headers (RRH), which may be at different physical locations. A gNB may dynamically select a subset of PCIs of the same serving cell to serve the UE via L1/L2 signaling (e.g., DCI or MAC-CE). In another implementation, each serving cell may have a single PCI (e.g., as defined in a specification of each serving cell). A gNB may dynamically select at least one serving cell to serve the UE via L1/L2 signaling.

Furthermore, random access channel (RACH) based L1/L2 inter-cell mobility may be implemented in the above examples. In such cases, the UE may select the PCI(s) and initiate a (RACH) procedure to selected PCI(s) if a HO condition is satisfied for the selected PCI(s), instead of the gNB selecting the PCI(s). For example, multiple candidate target PCIs can be pre-configured at the UE by the gNB.

The gNB may also configure the UE to measure an L1 metric per candidate target PCI. The L1 metric may include L1 reference signal received power (RSRP) and/or L1 signal-to-interference-plus-noise-ratio (L1-SINR). The gNB may further configure at least one HO condition per candidate target PCI. The HO condition may take the L1 metric as input, for example.

Whenever the HO condition is satisfied for a candidate target PCI, the UE may initiate reconfiguration with synchronization (e.g., via RACH) on UL resource configured for that PCI. Completion of the RACH based L1/L2 HO may be indicated via a HO complete message signaled via L1/L2 signaling. This HO complete message may be sent from the UE to the RRH and/or the cell associated with the candidate target PCI. Alternatively, the HO complete message may be received by the UE.

After the L1/L2 based cell selection is initiated by the gNB or the UE, the UE may begin communicating with the selected PCI(s) and stop monitoring the old PCI(s). However, it may be beneficial to have confirmation from the target cell associated with the selected PCI(s), that the handover signaling was successfully received. For example, the selected (new) PCI(s) may have degraded link quality due to outdated channel measurement when the cell selection decision is made. Thus, the communications on the selected (new) PCI(s) may not go through.

Accordingly, certain aspects provide for the selected PCI(s) to transmit a success response to the UE to confirm success of the handover signaling. After receiving this success response, the UE may safely terminate communications with/monitoring of the old PCI(s). In particular, after the L1/L2 based cell selection is initiated, the RRH/cell associated with selected PCI(s) can send a success response to the UE (e.g., within a certain time window).

FIG. 7 illustrates operations 700 that are performed by a UE to receive a success response in L1/L2-based mobility, in accordance with certain aspects of the present disclosure. Operations 700 may be performed, for example, by a UE 120 illustrated in FIG. 1.

Operations 700 begin, at 702, by receiving signaling configuring multiple candidate target PCIs of at least one candidate target cell that supports physical (PHY) layer or medium access control (MAC) layer mobility signaling. At 704, the UE participates in a handover procedure to a target cell associated with a selected one or more of the candidate target PCIs based on PHY layer or MAC layer mobility signaling. At 706, the UE receives, from the target cell, a response message indicating success of the handover procedure. In certain aspects, the success response may be carried in L1/L2 signaling (e.g., DCI or MAC-CE).

At 708, the UE terminates activity with one or more source PCIs after receiving the response message. In certain aspects, terminating activity may include stopping communicating with and/or monitoring for physical downlink control channel (PDCCH) on the old PCI(s).

FIG. 8 illustrates example operations 800 that may considered complementary to operations 700 of FIG. 7. For example, operations 800 are performed by a network entity (e.g., a gNB DU/CU of FIG. 5 or 6) to provide a UE (performing operations 700 of FIG. 7) with a success response in L1/L2-based mobility.

Operations 800 begin, at 802, by transmitting, to a UE, signaling configuring multiple candidate target PCIs of at least one candidate target cell that supports PHY layer or MAC layer mobility signaling. At 804, the network entity participates in a handover procedure of the UE to a target cell associated with a selected one or more of the candidate target PCIs based on PHY layer or MAC layer mobility signaling. At 806, the network entity transmits, via the target cell, a response message indicating success of the handover procedure.

In certain aspects, upon receiving the success response, the UE may further send a confirmation indicator to the old PCI(s) and/or the new PCI(s) to indicate the reception of the success response. This confirmation indicator can be carried in L1/L2 signaling (e.g., physical RACH (PRACH), sounding reference signal (SRS), uplink control information (UCI), MAC-CE, etc.).

As noted above, in some cases, the gNB initiates the L1/L2 mobility. In such cases, the gNB indicates selected PCI(s) to the UE via L1/L2 signalling. In some examples, after receiving the indication (e.g., a PCI and/or cell selection command), the UE may start monitoring a PDCCH on the RRH/cell associated with selected PCI(s). The selected RRH/cell may then transmit the success response after the gNB transmits the PCI/cell selection command to the UE.

The success response can be carried in downlink control information (DCI), which can be scrambled by a cell radio network temporary identifier (C-RNTI) assigned to the UE for a particular PCI. In some cases, the success response may be sent within a time window starting the gNB's transmission of the selection command.

In certain aspects, after receiving the PCI/cell selection command, UE may send an uplink (UL) signal to the RRH/cell associated with the selected PCI(s) as a cell selection request. The UL signal can be PRACH preamble, SRS, physical uplink control channel (PUCCH), physical uplink shared channel (PUSCH), etc. The selected RRH/cell may then transmit the success response after receiving the UL signal from the UE, and the success response can be carried in DCI, which can be scrambled by a C-RNTI assigned to the UE for this particular PCI. Similar to above, the success response may be sent within a time window starting from receiving the UL signal from the UE.

As noted above, in some cases, the UE may initiate the L1/L2 mobility. In such cases, the UE may select the new PCI(s) satisfying the cell selection condition and initiate RACH to the RRH/cell associated with selected PCI(s).

In the case where the RACH is contention free random access (CFRA) based, after sending the RACH preamble, the UE may start monitoring the PDCCH on the RRH/cell associated with selected PCI(s). Then, the selected RRH/cell may transmit the success response after receiving the preamble from the UE, and the success response can be carried in DCI, which can be scrambled by a C-RNTI assigned to the UE for this particular PCI. Similar to above, the success response may be sent within a time window starting from receiving the UL signal from the UE.

For contention based random access (CBRA) based RACH, after sending the RACH preamble, the gNB may respond with a message (e.g., a random access response (RAR) message) that schedules a subsequent message. The UE may further transmit the UE's identity (e.g., an assigned C-RNTI for this PCI) in any later UL messages/transmissions. The selected RRH/cell may transmit the success response after receiving the identity from the UE, and the success response can be carried in DCI, which can be scrambled by the C-RNTI assigned to the UE for this PCI. Similar to above, the success response should be sent within a time window starting from receiving the identity from the UE.

Therefore, by leveraging the response of a successfully completed HO procedure, the UE can avoid degraded link quality for new PCI(s) due to outdated channel measurement when a cell selection decision is made, and the link quality with a target cell can be improved.

### Example Communications Devices

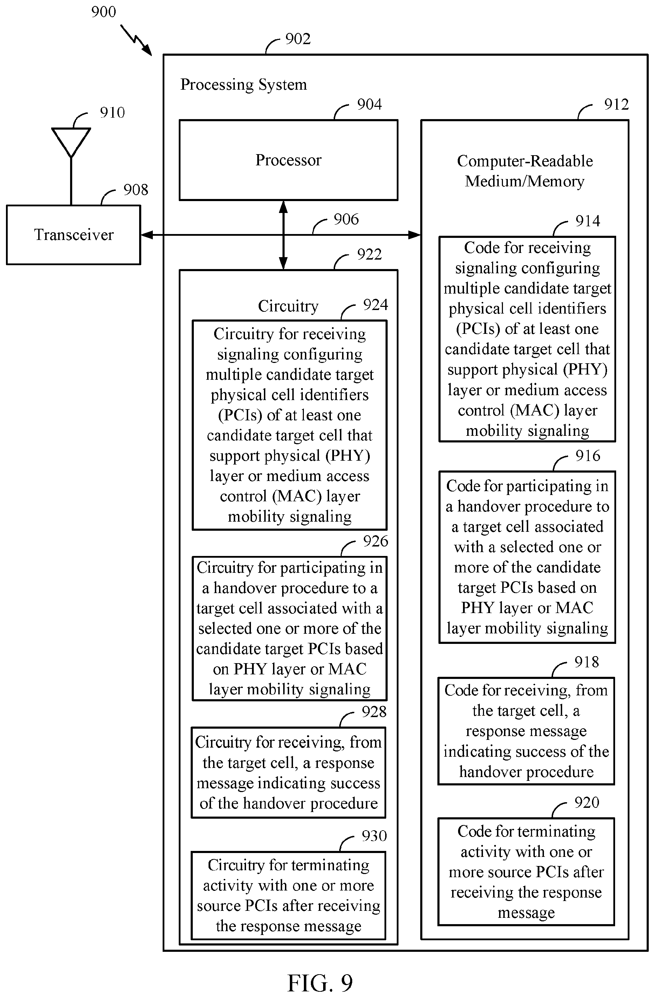

FIG. 9 illustrates a communications device 900 (e.g., a UE 120a of FIG. 1) that may include various components (e.g., corresponding to means-plus-function components) configured to perform operations for the techniques disclosed herein, such as the operations illustrated in FIG. 7. The communications device 900 includes a processing system 902 coupled to a transceiver 908 (e.g., a transmitter and/or a receiver). The transceiver 908 is configured to transmit and receive signals for the communications device 900 via an antenna 910, such as the various signals as described herein. The processing system 902 may be configured to perform processing functions for the communications device 900, including processing signals received and/or to be transmitted by the communications device 900.

The processing system 902 includes a processor 904 coupled to a computer-readable medium/memory 912 via a bus 906. In certain aspects, the computer-readable medium/memory 912 is configured to store instructions (e.g., computer-executable code) that when executed by the processor 904, cause the processor 904 to perform the operations illustrated in FIG. 7, or other operations for performing the various techniques discussed herein. In certain aspects, computer-readable medium/memory 912 stores code 914 for receiving signaling configuring multiple candidate target physical cell identifiers (PCIs) of at least one candidate target cell that supports physical (PHY) layer or medium access control (MAC) layer mobility signaling; code 916 for participating in a handover procedure to a target cell associated with a selected one or more of the candidate target PCIs based on PHY layer or MAC layer mobility signaling; code 918 for receiving, from the target cell, a response message indicating success of the handover procedure; and code 920 for terminating activity with one or more source PCIs after receiving the response message.

In certain aspects, the processing system 902 has circuitry 922 configured to implement the code stored in the computer-readable medium/memory 912. In certain aspects, the circuitry 922 is coupled to the processor 904 and/or the computer-readable medium/memory 912 via the bus 906. For example, the circuitry 922 includes circuitry 924 for receiving signaling configuring multiple candidate target PCIs of at least one candidate target cell that supports PHY layer or MAC layer mobility signaling; circuity 926 for participating in a handover procedure to a target cell associated with a selected one or more of the candidate target PCIs based on PHY layer or MAC layer mobility signaling; circuitry 928 for receiving, from the target cell, a response message indicating success of the handover procedure; and circuitry 930 for terminating activity with one or more source PCIs after receiving the response message.

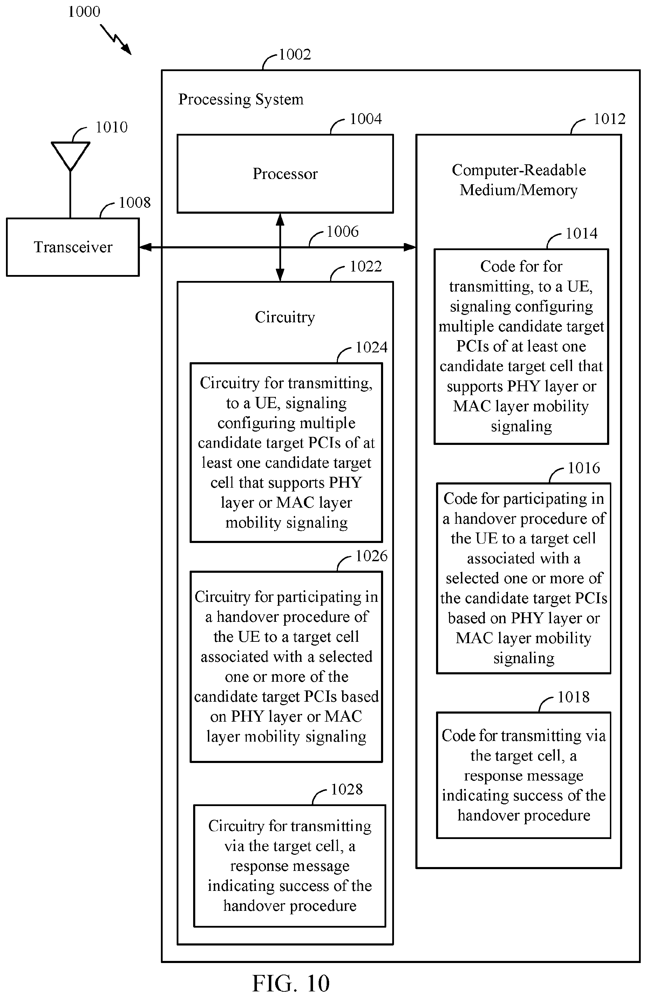

FIG. 10 illustrates a communications device 1000 (e.g., a network entity such as the BS 110a of FIG. 1) that may include various components (e.g., corresponding to means-plus-function components) configured to perform operations for the techniques disclosed herein, such as the operations illustrated in FIG. 8. The communications device 1000 includes a processing system 1002 coupled to a transceiver 1008 (e.g., a transmitter and/or a receiver). The transceiver 1008 is configured to transmit and receive signals for the communications device 1000 via an antenna 1010, such as the various signals as described herein. The processing system 1002 may be configured to perform processing functions for the communications device 1000, including processing signals received and/or to be transmitted by the communications device 1000.

The processing system 1002 includes a processor 1004 coupled to a computer-readable medium/memory 1012 via a bus 1006. In certain aspects, the computer-readable medium/memory 1012 is configured to store instructions (e.g., computer-executable code) that when executed by the processor 1004, cause the processor 1004 to perform the operations illustrated in FIG. 8, or other operations for performing the various techniques discussed herein. In certain aspects, computer-readable medium/memory 1012 stores code 1014 for transmitting, to a UE, signaling configuring multiple candidate target PCIs of at least one candidate target cell that supports PHY layer or MAC layer mobility signaling; code 1016 for participating in a handover procedure of the UE to a target cell associated with a selected one or more of the candidate target PCIs based on PHY layer or MAC layer mobility signaling; and code 1018 for transmitting via the target cell, a response message indicating success of the handover procedure.

In certain aspects, the processing system 1002 has circuitry 1022 configured to implement the code stored in the computer-readable medium/memory 1012. In certain aspects, the circuitry 1022 is coupled to the processor 1004 and/or the computer-readable medium/memory 1012 via the bus 1006. For example, the circuitry 1022 includes circuitry 1024 for transmitting, to a UE, signaling configuring multiple candidate target PCIs of at least one candidate target cell that supports PHY layer or MAC layer mobility signaling; circuitry 1026 for participating in a handover procedure of the UE to a target cell associated with a selected one or more of the candidate target PCIs based on PHY layer or MAC layer mobility signaling; and circuitry 1028 for transmitting via the target cell, a response message indicating success of the handover procedure.

The techniques described herein may be used for various wireless communication technologies, such as NR (for example, 5G NR), 3GPP Long Term Evolution (LTE), LTE-Advanced (LTE-A), code division multiple access (CDMA), time division multiple access (TDMA), frequency division multiple access (FDMA), orthogonal frequency division multiple access (OFDMA), single-carrier frequency division multiple access (SC-FDMA), time division synchronous code division multiple access (TD-SCDMA), and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95, and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). LTE and LTE-A are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). NR is an emerging wireless communications technology under development.

The techniques described herein may be used for the wireless networks and radio technologies mentioned above as well as other wireless networks and radio technologies. For clarity, while aspects may be described herein using terminology commonly associated with 3G, 4G, or 5G wireless technologies, aspects of the present disclosure can be applied in other generation-based communication systems.

In 3GPP, the term "cell" can refer to a coverage area of a Node B (NB) or a NB subsystem serving this coverage area, depending on the context in which the term is used. In NR systems, the term "cell" and BS, next generation NodeB (gNB or gNodeB), access point (AP), distributed unit (DU), carrier, or transmission reception point (TRP) may be used interchangeably. A BS may provide communication coverage for a macro cell, a pico cell, a femto cell, or other types of cells. A macro cell may cover a relatively large geographic area (for example, several kilometers in radius) and may allow unrestricted access by UEs with service subscription. A pico cell may cover a relatively small geographic area and may allow unrestricted access by UEs with service subscription. A femto cell may cover a relatively small geographic area (for example, a home) and may allow restricted access by UEs having an association with the femto cell (for example, UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS.

A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet computer, a camera, a gaming device, a netbook, a smartbook, an ultrabook, an appliance, a medical device or medical equipment, a biometric sensor/device, a wearable device such as a smart watch, smart clothing, smart glasses, a smart wrist band, smart jewelry (for example, a smart ring, a smart bracelet, etc.), an entertainment device (for example, a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered machine-type communication (MTC) devices or evolved MTC (eMTC) devices. MTC and eMTC UEs include, for example, robots, drones, remote devices, sensors, meters, monitors, location tags, etc., that may communicate with a BS, another device (for example, remote device), or some other entity. A wireless node may provide, for example, connectivity for or to a network (for example, a wide area network such as Internet or a cellular network) via a wired or wireless communication link. Some UEs may be considered Internet-of-Things (IoT) devices, which may be narrowband IoT (NB-IoT) devices.

Some wireless networks (for example, LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a "resource block" (RB)) may be 12 subcarriers (or 180 kHz). Consequently, the nominal Fast Fourier Transfer (FFT) size may be equal to 128, 256, 512, 1024 or 2048 for system bandwidth of 1.25, 2.5, 5, 10, or 20 megahertz (MHz), respectively. The system bandwidth may also be partitioned into subbands. For example, a subband may cover 1.08 MHz (for example, 6 RBs), and there may be 1, 2, 4, 8, or 16 subbands for system bandwidth of 1.25, 2.5, 5, 10 or 20 MHz, respectively. In LTE, the basic transmission time interval (TTI) or packet duration is the 1 ms subframe.

NR may utilize OFDM with a CP on the uplink and downlink and include support for half-duplex operation using TDD. In NR, a subframe is still 1 ms, but the basic TTI is referred to as a slot. A subframe contains a variable number of slots (for example, 1, 2, 4, 8, 16, ... slots) depending on the subcarrier spacing. The NR RB is 12 consecutive frequency subcarriers. NR may support a base subcarrier spacing of 15 KHz and other subcarrier spacing may be defined with respect to the base subcarrier spacing, for example, 30 kHz, 60 kHz, 120 kHz, 240 kHz, etc. The symbol and slot lengths scale with the subcarrier spacing. The CP length also depends on the subcarrier spacing. Beamforming may be supported and beam direction may be dynamically configured. MIMO transmissions with precoding may also be supported. In some examples, MIMO configurations in the DL may support up to 8 transmit antennas with multi-layer DL transmissions up to 8 streams and up to 2 streams per UE. In some examples, multi-layer transmissions with up to 2 streams per UE may be supported. Aggregation of multiple cells may be supported with up to 8 serving cells.

In some examples, access to the air interface may be scheduled. A scheduling entity (for example, a BS) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. In some examples, a UE may function as a scheduling entity and may schedule resources for one or more subordinate entities (for example, one or more other UEs), and the other UEs may utilize the resources scheduled by the UE for wireless communication. In some examples, a UE may function as a scheduling entity in a peer-to-peer (P2P) network, or in a mesh network. In a mesh network example, UEs may communicate directly with one another in addition to communicating with a scheduling entity.

As used herein, the term "determining" may encompass one or more of a wide variety of actions. For example, "determining" may include calculating, computing, processing, deriving, investigating, looking up (for example, looking up in a table, a database or another data structure), assuming and the like. Also, "determining" may include receiving (for example, receiving information), accessing (for example, accessing data in a memory) and the like. Also, "determining" may include resolving, selecting, choosing, establishing and the like.

As used herein, "or" is used intended to be interpreted in the inclusive sense, unless otherwise explicitly indicated. For example, "a or b" may include a only, b only, or a combination of a and b. As used herein, a phrase referring to "at least one of" or "one or more of" a list of items refers to any combination of those items, including single members. For example, "at least one of: a, b, or c" is intended to cover the possibilities of: a only, b only, c only, a combination of a and b, a combination of a and c, a combination of b and c, and a combination of a and b and c.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components. For example, various operations shown in FIGs. 7 and 8 may be performed by various processors shown in FIG. 2.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a UE 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.
Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For example, instructions for performing the operations described herein and illustrated in FIGs. 7-10.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one or more example processes in the form of a flowchart or flow diagram. However, other operations that are not depicted can be incorporated in the example processes that are schematically illustrated. For example, one or more additional operations can be performed before, after, simultaneously, or between any of the illustrated operations. In some circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

## Claims

1. A method for wireless communications, the method being performed by a user equipment, UE, and comprising:
receiving (702), from a network entity, signaling configuring multiple candidate target physical cell identifiers, PCIs, of at least one candidate target cell that supports physical, PHY, layer or medium access control, MAC, layer mobility signaling;
participating (704) in a handover procedure to a target cell associated with a selected one or more of the candidate target PCIs based on PHY layer or MAC layer mobility signaling, wherein the selected one or more of the candidate target PCIs are indicated to the UE by the network entity in a selection command signaled via the PHY layer or MAC layer mobility signaling;
receiving (706), from the target cell, a response message indicating success of the handover procedure; and
terminating (708) activity with one or more source PCIs after receiving the response message.

2. The method of claim 1, wherein the response message is conveyed via at least one of a downlink control information, DCI, or a MAC control element, MAC-CE.

3. The method of claim 1, wherein the terminated activity comprises at least one of:
communications with the one or more source PCIs; or
monitoring for physical downlink control channel, PDCCH, on the one or more source PCIs.

4. The method of claim 1, further comprising sending an indication confirming receipt of the response message to at least one of:
the selected one or more of the candidate target PCIs; or
the one or more source PCIs.

5. The method of claim 4, wherein the indication is conveyed via at least one of a physical random access channel, PRACH, preamble, uplink reference signal, uplink control information, UCI, or a MAC control element, MAC-CE.

6. The method of claim 1, further comprising, after receiving the selection command:
monitoring for a physical downlink control channel, PDCCH, on a cell associated with the selected one or more of the candidate target PCIs.

7. The method of claim 1, wherein the response message is conveyed via a downlink control information, DCI, scrambled by a radio network temporary identifier, RNTI, assigned to the UE for the selected one or more of the candidate target PCIs.

8. The method of claim 1, wherein the response message is conveyed within a time window starting from when the network entity sends the selection command.

9. The method of claim 1, further comprising, after receiving the selection command:
sending an uplink signal to the target cell as a cell selection request.

10. The method of claim 9, wherein the uplink signal comprises at least one of a physical random access channel, PRACH, preamble, uplink reference signal, physical uplink control channel, PDCCH, or physical uplink shared channel.

11. The method of claim 9, wherein the response message is received from the target cell after sending the uplink signal to the target cell.

12. An apparatus for wireless communications at a user equipment, UE, comprising at least one means for performing the method of any of claims 1-11.

## Patentansprüche

1. Ein Verfahren für drahtlose Kommunikationen, wobei das Verfahren von einem Benutzergerät, UE, durchgeführt wird umfassend:
Empfangen (702), von einer Netzwerkentität, von Signalisierung, die mehrere Kandidaten-physische-Zelle-Identifikatoren, PCIs, von mindestens einer Kandidaten-Zielzelle konfiguriert, die physische, PHY, Schicht oder Medium-Access-Control, MAC, Schicht-Mobilitätssignalisierung unterstützt;
Teilnehmen (704) an einer Übergabeprozedur an eine Zielzelle, die mit einem ausgewählten einen oder mehreren der Kandidaten-Ziel-PCIs assoziiert ist, basierend auf PHY-Schicht- oder MAC-Schicht-Mobilitätssignalisierung, wobei der ausgewählte eine oder die ausgewählten mehreren der Kandidaten-Ziel-PCIs dem UE durch die Netzwerkentität in einem Auswahlbefehl angezeigt werden, der über die PHY-Schicht- oder MAC-Schicht-Mobilitätssignalisierung signalisiert wird;
Empfangen (706), von der Zielzelle, einer Antwortnachricht, die den Erfolg der Übergabeprozedur anzeigt; und
Beenden (708) der Aktivität mit einem oder mehreren Quell-PCIs nach dem Empfangen der Antwortnachricht.

2. Verfahren nach Anspruch 1, wobei die Antwortnachricht über mindestens eines von einer Downlink-Steuerinformation, DCI, oder einem MAC-Steuerelement, MAC-CE, übermittelt wird.

3. Verfahren nach Anspruch 1, wobei die beendete Aktivität mindestens eines umfasst von:
Kommunikationen mit dem einen oder den mehreren Quell-PCIs; oder
Überwachen auf physischen Downlink-Steuerkanal, PDCCH, auf dem einen oder den mehreren Quell-PCIs.

4. Verfahren nach Anspruch 1, ferner umfassend das Senden einer Anzeige, die den Empfang der Antwortnachricht bestätigt, an mindestens eines von:
dem ausgewählten einen oder den ausgewählten mehreren der Kandidaten-Ziel-PCIs; oder
dem einen oder den mehreren Quell-PCIs.

5. Verfahren nach Anspruch 4, wobei die Anzeige über mindestens eines von einer physischen Direktzugriffskanal, PRACH, Präambel, Uplink-Referenzsignal, Uplink-Steuerinformation, UCI, oder einem MAC-Steuerelement, MAC-CE, übermittelt wird.

6. Verfahren nach Anspruch 1, ferner umfassend, nach dem Empfangen des Auswahlbefehls:
Überwachen auf einen physischen Downlink-Steuerkanal, PDCCH, auf einer Zelle, die mit dem ausgewählten einen oder den ausgewählten mehreren der Kandidaten-Ziel-PCIs assoziiert ist.

7. Verfahren nach Anspruch 1, wobei die Antwortnachricht über eine Downlink-Steuerinformation, DCI, übermittelt wird, die durch einen temporären Funknetzwerkidentifikator, RNTI, verschlüsselt ist, der dem UE für den ausgewählten einen oder die ausgewählten mehreren der Kandidaten-Ziel-PCIs zugewiesen ist.

8. Verfahren nach Anspruch 1, wobei die Antwortnachricht innerhalb eines Zeitfensters übermittelt wird, das beginnt, wenn die Netzwerkentität den Auswahlbefehl sendet.

9. Verfahren nach Anspruch 1, ferner umfassend, nach dem Empfangen des Auswahlbefehls:
Senden eines Uplink-Signals an die Zielzelle als eine Zellenauswahlanforderung.

10. Verfahren nach Anspruch 9, wobei das Uplink-Signal mindestens eines von einer physischen Direktzugriffskanal, PRACH, Präambel, Uplink-Referenzsignal, physischem Uplink-Steuerkanal, PUCCH, oder physischem gemeinsam genutztem Uplink-Kanal umfasst.

11. Verfahren nach Anspruch 9, wobei die Antwortnachricht von der Zielzelle nach dem Senden des Uplink-Signals an die Zielzelle empfangen wird.

12. Eine Vorrichtung für drahtlose Kommunikationen an einem Benutzergerät, UE, umfassend mindestens ein Mittel zum Durchführen des Verfahrens nach einem der Ansprüche 1-11.

## Revendications

1. Un procédé de communication sans fil, le procédé étant réalisé par un équipement utilisateur, UE, et comprenant :
la réception (702), à partir d'une entité de réseau, d'une signalisation configurant de multiples identifiants de cellule physiques, PCI, cibles candidats d'au moins une cellule cible candidate qui prend en charge une signalisation de mobilité de couche physique, PHY, ou de couche de contrôle d'accès au support, MAC ;
la participation (704) à une procédure de handover vers une cellule cible associée à un ou plusieurs des PCI cibles candidats sélectionnés sur la base d'une signalisation de mobilité de couche PHY ou de couche MAC, dans lequel les un ou plusieurs des PCI cibles candidats sélectionnés sont indiqués à l'UE par l'entité de réseau dans une commande de sélection signalée via la signalisation de mobilité de couche PHY ou de couche MAC ;
la réception (706), à partir de la cellule cible, d'un message de réponse indiquant la réussite de la procédure de handover ; et
la cessation (708) d'une activité avec un ou plusieurs PCI sources après réception du message de réponse.

2. Le procédé selon la revendication 1, dans lequel le message de réponse est transmis via au moins l'une parmi une information de contrôle de liaison descendante, DCI, ou un élément de contrôle MAC, MAC-CE.

3. Le procédé selon la revendication 1, dans lequel l'activité cessée comprend au moins l'une parmi :
des communications avec les un ou plusieurs PCI sources ; ou
la surveillance d'un canal physique de contrôle de liaison descendante, PDCCH, sur les un ou plusieurs PCI sources.

4. Le procédé selon la revendication 1, comprenant en outre l'envoi d'une indication confirmant la réception du message de réponse à au moins l'un parmi :
les un ou plusieurs des PCI cibles candidats sélectionnés ; ou
les un ou plusieurs PCI sources.

5. Le procédé selon la revendication 4, dans lequel l'indication est transmise via au moins l'un parmi un préambule de canal physique d'accès aléatoire, PRACH, un signal de référence de liaison montante, une information de contrôle de liaison montante, UCI, ou un élément de contrôle MAC, MAC-CE.

6. Le procédé selon la revendication 1, comprenant en outre, après la réception de la commande de sélection :
la surveillance d'un canal physique de contrôle de liaison descendante, PDCCH, sur une cellule associée aux un ou plusieurs des PCI cibles candidats sélectionnés.

7. Le procédé selon la revendication 1, dans lequel le message de réponse est transmis via une information de contrôle de liaison descendante, DCI, brouillée par un identifiant temporaire de réseau radio, RNTI, attribué à l'UE pour les un ou plusieurs des PCI cibles candidats sélectionnés.

8. Le procédé selon la revendication 1, dans lequel le message de réponse est transmis dans une fenêtre de temps commençant au moment où l'entité de réseau envoie la commande de sélection.

9. Le procédé selon la revendication 1, comprenant en outre, après la réception de la commande de sélection :
l'envoi à la cellule cible d'un signal de liaison montante en tant que requête de sélection de cellule.

10. Le procédé selon la revendication 9, dans lequel le signal de liaison montante comprend au moins l'un parmi un préambule de canal physique d'accès aléatoire, PRACH, un signal de référence de liaison montante, un canal physique de contrôle de liaison montante, PUCCH, ou un canal physique partagé de liaison montante.

11. Le procédé selon la revendication 9, dans lequel le message de réponse est reçu à partir de la cellule cible après l'envoi du signal de liaison montante à la cellule cible.

12. Un appareil pour la communication sans fil au niveau d'un équipement utilisateur, UE, comprenant au moins un moyen pour réaliser le procédé selon l'une des revendications 1 à 11.
